# EUROPÄISCHE PATENTSCHRIFT

(11) **EP 1 410 324 B1**
(45) Veröffentlichungstag und Bekanntmachung des Hinweises auf die Patenterteilung: **03.08.2005**
(21) Anmeldenummer: 02722279.3
(22) Anmeldetag: 28.03.2002
(51) Int. Cl.: G06K 19/16, G02B 26/10, G02B 5/32, G03H 1/22

(54) **DIREKTLESEGERAET FUER HOLOGRAMME, INSBESONDERE DIGITALE HOLOGRAMME**
DIRECT READER FOR HOLOGRAMS, ESPECIALLY FOR DIGITAL HOLOGRAMS
DISPOSITIF DE LECTURE DIRECTE POUR HOLOGRAMMES, EN PARTICULIER POUR HOLOGRAMMES NUMERIQUES

(30) Priorität: 12.04.2001 DE 10118589; 02.08.2001 DE 10137833
(43) Veröffentlichungstag der Anmeldung: 21.04.2004
(73) Patentinhaber: tesa scribos GmbH, 69126 Heidelberg (DE)
(72) Erfinder: NOEHTE, Steffen, 69469 Weinheim (DE); DIETRICH, Christoph, 69126 Heidelberg (DE); GERSPACH, Matthias, 69121 Heidelberg (DE); SCHEIBENSTOCK, Steffen, 70197 Stuttgart (DE); BORGSMÜLLER, Stefan, 69115 Heidelberg (DE); STADLER, Stefan, 22359 Hamburg (DE); LEIBER, Jörn, 22529 Hamburg (DE)
(74) Vertreter: Rox, Thomas Dr.
(86) Internationale Anmeldenummer: PCT/EP2002/003496
(87) Internationale Veröffentlichungsnummer: WO 2002/084588

(56) Entgegenhaltungen:
- EP-A- 0 802 462
- DE-A- 4 237 415
- US-A- 5 383 056
- US-A- 5 623 347

## Beschreibung

Die Erfindung betrifft eine Vorrichtung zum Auslesen eines in einem Speichermedium gespeicherten Hologramms, insbesondere von digitalen Hologrammen. Ebenso betrifft die Erfindung die Nutzung von digitalen Hologrammen als individuelles Merkmal von Gegenständen. Insbesondere betrifft die Erfindung ein einfach zu handhabendes Lesegerät für Hologramme.

Allgemein sind aus dem Stand der Technik Lesegeräte für Hologramme dagegen vielfältig bekannt. Viele der Lesegeräte beziehen sich auf konventionell belichtete Hologramme, einige beschäftigen sich jedoch auch mit Computer Generierten Hologrammen (CGH).

Die US 6,001,510, von der die vorliegende Erfindung ausgeht, offenbart Fast Fourier Transfom Computer Generierte Hologramme (FFT-CGHs) von Teilchenspuren, die auf Karten gespeichert werden. Dazu ist auch ein Lesegerät beschrieben. Dieses Lesegerät weist eine Strahlungsquelle zum Erzeugen eines Lesestrahls, eine Anlagefläche zum Anlegen des Speichermediums in einer vorgegebenen Ebene und eine Austrittsöffnung für ein Aufnehmen des holographischen Bildes. Im Strahlengang des rekonstruierten Bildes ist eine Fourierlinse für eine scharfe Abbildung vorgesehen.

Folgende weitere Druckschriften des Standes der Technik beschäftigen sich mit dem Thema Lesegeräte für holographische Informationen:
US 5,422,744: Holographischer Barcode (klassische Zweistrahlholographie) mit einfachem Lesegerät.
US 5,565,667: Holographischer Barcode mit Lesegeräten und Verfahren, um die Lesesicherheit zu erhöhen.
US 4,126,373: Hologramm auf einer Karte, das mit klassischer Zweistrahlholographie belichtet wird und als Objekt die auf die Karte gedruckte Information speichert. Schwerpunkt liegt hier auf dem Material der Karte bzw. des Hologrammbereiches.
US 5,623,347: Lesegerätes mit CCD Kamera, bei dem es um datentragende Hologramme geht, die jedoch auf Zweistrahlholographie beruhen.
Allgemeine Artikel über CGHs und Sicherheitsanwendungen:
   - "Computer generated holograms and diffraction gratings in optical security applications" Pawel Stepien, SPIE Proc. Vol. 3973 (2000).
   - Holopack Holoprint GuideBook-Second Edition: Allgemeine Erwähnung von verschiedenen maschinenlesbaren DOVIDs (Diffractiv Optical Variable Image Device).
   - Holopack Holoprint GuideBook 1995: Artikel von David Pizanelli ab. Seite 195. Hier wird auch von maschinenlesbaren Hologrammen gesprochen.

Speziell bei Fouriertransformationshologrammen, seien es konventionell belichtete oder computergenerierte Hologramme, besteht das Problem, dass es zur Rekonstruktion der gespeicherten Information einer Transformationslinse bedarf. Diese ist im klassischen Fall im Strahlengang hinter dem Hologramm im Abstand ihrer positiven Brennweite zum Hologramm aufgestellt. Das rekonstruierte Bild ist dann scharf in der hinteren Brennebene der Linse zu beobachten. Alternativ lässt sich auch die Transformationslinse in direktem Kontakt zur Hologrammebene oder sogar vor dem Hologramm positionieren. Das rekonstruierte Bild ist wieder in der hinteren Brennebene der Transformationslinse scharf zu beobachten.

Die beiden letzen Möglichkeiten sind mit einem Phasenfehler behaftet, welcher sich aber auf die einzig zu beobachtenden Intensitätsverteilungen nicht auswirkt. In jedem Fall wird eine Transformationslinse zur Rekonstruktion des Hologramms benötigt.

Alternativ ist es auch möglich die Rekonstruktion auf einen Schirm zu werfen, der vergleichsweise weit entfernt positioniert ist. Dies hängt mit der Tatsache zusammen, dass das Fernfeldbeugungsmuster einer Fouriertransformation entspricht. Diese Möglichkeit ist jedoch mit geringerer Schärfe, geringerer Helligkeit und oft zu großen Abmessungen des Bildes verbunden und aus diesen Gründen nicht bevorzugt. Derartige Vorrichtungen sind aus der DE 42 37 415 und der US 5,623,347 bekannt.

Als weiteres Problem bei herkömmlichen Lesegeräten ist die Justage des Hologramms zum Lesegerät zu nennen. Diese ist notwendig, da man eine direkte Beleuchtung des Hologramms mit einem kollimierten oder fokusierten Laserstrahl benötigt um die Information auszulesen. Dies ist vergleichsweise einfach, wenn wie zum Beispiel bei einer Scheckkarte möglich, das Hologramm in einer klar definierten Position auf einem klar definierten Objekt angebracht ist. Dieses ist jedoch beispielsweise bei holographischen Etiketten, die prinzipiell überall aufgeklebt werden können, meist nicht der Fall, so dass sich allein aus der Justierung des Lesegeräts zum Hologramm eine bisher nicht erschöpfend einfach gelöste Aufgabe ergibt. Dies gilt übrigens sowohl für Transmissions- wie auch für Reflexionshologramme.

Der Erfindung liegt daher das technische Problem zugrunde, die aus dem Stand der Technik bekannten Vorrichtungen zum Auslesen von Hologrammen weiter zu vereinfachen.

Das zuvor aufgezeigte technische Problem wird erfindungsgemäß durch eine Vorrichtung nach Anspruch 1 gelöst. Erfindungsgemäß ist erkannt worden, dass die Linse des Auges als Transformationslinse genutzt und die Rekonstruktion des Hologramms direkt scharf auf die Netzhaut projiziert werden kann. Diese vereinfachte Konstruktion hat den Vorteil, dass man sich die "normale" Transformationslinse sparen kann.

Mit anderen Worten wird das technische Problem durch ein Lesegerät gelöst, das sich aufgrund seines speziellen Aufbaus das Auge des Betrachters als Fouriertransformationslinse zu Nutze macht und sich dadurch durch eine vergleichsweise einfache Konstruktion auszeichnet.

Das rekonstruierte Bild entsteht also erst auf der Netzhaut, wenn man sich durch ein Hologramm oder über eine Reflexion an einem Reflexionshologramm auf eine halbwegs kohärente Lichtquelle schaut. Da die Rekonstruktion direkt auf der Netzhaut entsteht, wenn man die Lichtquelle "scharf" stellt, hat sie mit sehr wenig Streulicht zu konkurrieren, ist also auch sichtbar, wenn man nicht den direkten Reflex der Lichtquelle ins Auge bekommt, sondern nur den in alle Raumrichtungen gestreuten Anteil.

Daraus ergibt sich sofort der Justagevorteil. Es ist eben nicht dafür zu sorgen, dass ein direkter Lichtstrahl das Hologramm beleuchtet.

Damit das Auslesen des Hologramms auch mit einem direkten Strahl möglich ist, ist die Intensität des Strahls so einzustellen, dass der direkte Reflex oder Strahl das Auge nicht schädigt oder blendet.

Das zuvor beschriebene Lesegerät kombiniert also eine Lichtquelle mit einem Justageokular, das es möglich macht, durch das Transmissionshologramm oder über das Reflexionshologramm auf die Lichtquelle oder einen gestreuten Reflex der selben zu schauen. Der Lichtstrahl kann dabei durch den freien Raum, aber auch nur innerhalb des Lesegeräts geführt sein.

Die Erfindung wird im folgenden anhand verschiedener Ausführungsbeispiele näher erläutert, wozu auf die beigefügte Zeichnung Bezug genommen wird. In der Zeichnung zeigen
- Fig. 1: ein erstes Ausführungsbeispiel einer erfindungsgemäßen Lesevorrichtung,
- Fig. 2: ein zweites Ausführungsbeispiel einer erfindungsgemäßen Lesevorrichtung,
- Fig. 3: ein drittes Ausführungsbeispiel einer erfindungsgemäßen Lesevorrichtung und
- Fig. 4: ein viertes Ausführungsbeispiel einer erfindungsgemäßen Lesevorrichtung.

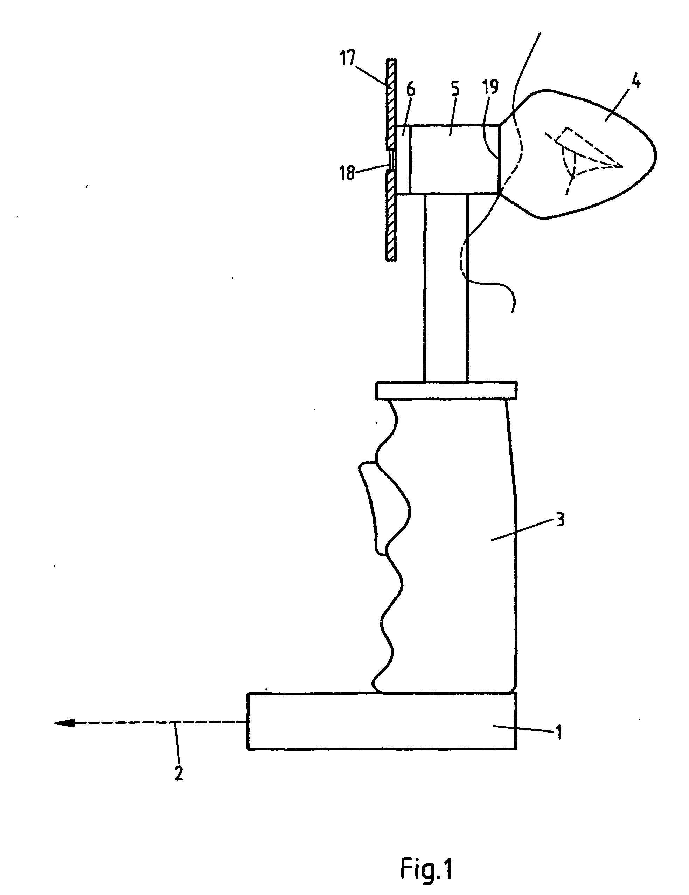

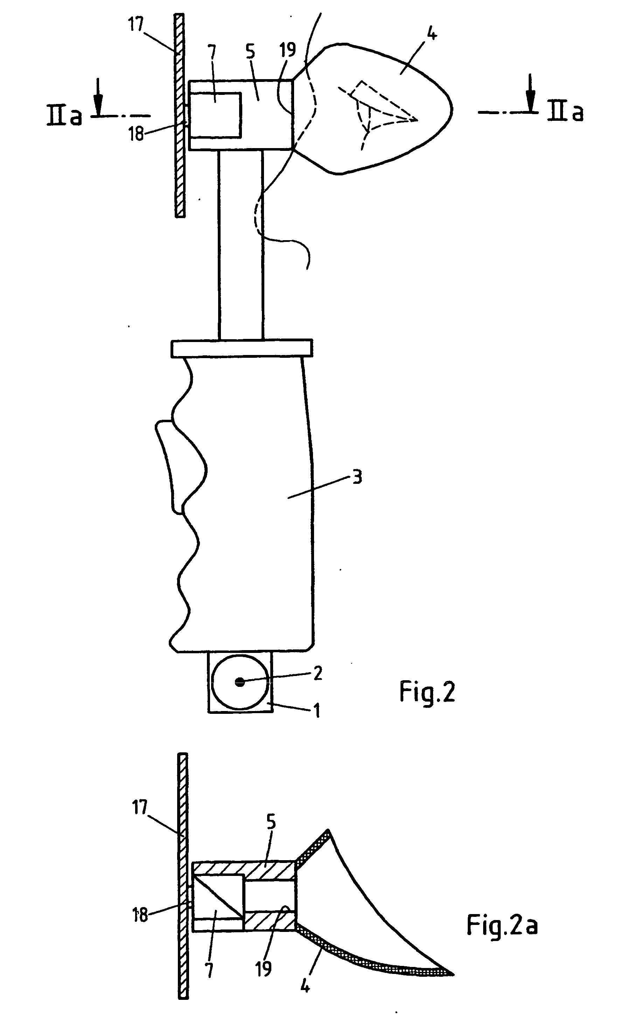

Die Fig. 1 und Fig. 2 zeigen zwei Ausführungsformen eines erfindungsgemäßen Lesegerätes ohne Transformationslinse. Hierbei ist ein Laserpointer 1, dessen Laserstrahl 2 mit einem Brennpunkt bevorzugt zwischen 50 cm und unendlich einstellbar ist, mit einem Handgriff 3 kombiniert, in den ein Schalter bzw. Auslöser für den Laserpointer eingearbeitet ist.

Oben am Handgriff 3 ist über ein Verbindungsstück ein Tubus 5 befestigt. Der Tubus 5 ist mit einem ergonomischen Gummiflansch 4 versehen, der eine Austrittsöffnung 19 umgibt, so dass es möglich ist, durch den Tubus 5 zu sehen, ohne von seitlichem Streulicht gestört zu werden. Fig. 2a zeigt insbesondere, dass der Tubus 5 hohl ausgebildet ist und auf der dem Auge des Betrachters zugewandten Seite eine Austrittsöffnung 19 aufweist. Weiterhin wird deutlich, dass der Strahlengang bzw. der optische Weg zwischen dem Speichermedium 18 und der Austrittsöffnung 19 frei ist, also kein optisches Element wie eine Fourriertransformationslinse aufweist. Somit kann vom Betrachter das Speichermedium 18 und somit das Hologramm direkt betrachtet werden.

Auf der anderen Seite des Tubus 5 ist eine Anlagefläche 6, bevorzugt aus Glas bzw. transparentem Kunststoff angebracht. An die Anlagefläche 6 läßt sich mit der anderen Hand beispielsweise eine Karte 17 mit dem Speichermedium 18 und dem auszulesenden Hologramm heranführen und so fixieren, dass man durch den Tubus 5 und durch das Hologramm auf den Reflex des Laserstrahls 2 sehen kann, der sich dann ergibt wenn man mit dem eingebauten Laserpointer 1 beispielsweise eine beabstandete glatte helle Oberfläche bestrahlt.

Im Fall des Lesegeräts für Reflexionshologramme gemäß Fig. 2 ist diese transparente Anlagefläche durch einen Strahlteilerwürfel 7 gebildet, alternativ ist im Vergleich zur Fig. 1 auch nur eine Ergänzung durch eine Strahlteilerplatte möglich.

Die Strahlrichtung des Laserpointers 1 ist um 90° zu der Seite gedreht, die der des verwendeten Auges des Betrachters entspricht. Der Tubus 5 hat zur selben Seite eine Öffnung, die so gestaltet ist, dass das von einer beabstandeten Oberfläche reflektierte Licht des Laserstrahls 2 des Laserpointers 1 seitlich auf den Strahlteiler 7 fallen kann. Es ist bei diesem Ausführungsbeispiel möglich, mit der anderen Hand ein entsprechendes Reflexionshologramm so vor dem Tubus 5 zu fixieren, dass man durch den Tubus 5 auf das Hologramm und in Reflexion weiter auf den Reflex des Laserpointers 1 sehen kann.

Im folgenden wird eine Beschreibung der Wahrnehmung angegeben, wenn man auf oben beschriebene Weise Hologramme rekonstruiert. Dabei geht es im Grunde um die Frage, ob man das rekonstruierte Bild optisch vergrößern kann.

Wenn ein Betrachter in der zuvor anhand der Fig. 1 und 2 beschriebenen Weise durch ein Hologramm bzw. über ein Hologramm auf einen reflektierten Spot des Laserstrahls 2 schaut, wirkt die Rekonstruktion um so schärfer; je weiter der Punkt weg ist. Zudem wirkt die Rekonstruktion auch scheinbar größer. Daher korreliert die Schärfe des rekonstruierten Hologramms mit der Größe des Spots, der sich als Bild der Lichtquelle 1 auf der Netzhaut des Auges des Betrachters abbildet.

Wird zum Beispiel eine Linse in den Strahlengang eingebracht, die dergestalt ist, dass sie die Lichtquelle vergrößert, wird zwar das rekonstruierte Bild auch größer, jedoch auch unschärfer, da das Bild der Lichtquelle auf der Netzhaut größer wird. Das gleiche gilt auch für den Fall, dass man sich bei physikalisch gleichbleibender Spotgröße auf den Spot zu bewegt. Mit der Verringerung des Abstandes wird das Bild des Spots größer und die Rekonstruktion unschärfer.

In der zuvor beschriebenen Weise ist eine optische Vergrößerung des rekonstruierten Bildes möglich. Aber dieses ist nur dann sinnvoll, wenn die Lichtquelle, also der reflektierte Spot des Laserstrahls 2 oder eine aktive Quelle 1 klein genug sind, so dass ihr Raumwinkel nicht größer als die gewünschte Auflösung des reproduzierten Hologramms ist.

Auf die in den Fig. 1 und 2 beschriebenen Lesegeräte übertragen, ist es sinnvoll und notwendig, die Kollimation des Laserstrahls 2 des Laserpointers 1 auf minimalen Spotdurchmesser in gegebenem Abstand einzustellen.

Eine weitere mögliche Vergrößerung der rekonstruierten Bildes besteht in der Erhöhung der Ortsauflösung des Hologramms selbst, die direkt mit einer Erhöhung des möglichen Raumwinkels für das reproduzierte Hologramm gekoppelt ist. Die Ortsauflösung ist jedoch auch mit einer Verkleinerung des Hologramms verbunden, wenn man die Punktzahl der zu berechnenden Punkte (Computer Generiertes Hologramm - CGH) nicht erhöhen will.

Beispielsweise kann ein CGH in einem Raster von 1024 x 1024 Punkten mit einer Auflösung von 1 µm pro Punkt, woraus sich eine Hologrammgröße von 1x1 mm² ergibt. Bei dieser geringen Größe ist das "Durchschauen" für den Betrachter nicht mehr so einfach durchzuführen. Als Lösung für dieses Problem sind jedoch die folgenden bevorzugten Ausgestaltungen der Erfindung geeignet.
a) Das Hologramm wird künstlich größer gemacht, indem man gleiche Hologramme in einem quadratischen Array anordnet (2x2, 3x3, etc.). Damit vergrößert sich zwar die Belichtungszeit, jedoch bleibt der Rechenaufwand konstant. Diese Lösung ist mit einer inhärenten Struktur auf der Rekonstruktion verbunden, die jedoch für die meisten Anwendungen nicht stört.
b) Das Lesegerät weist eine zusätzliche Justierhilfe in Form einer einschwenkbaren Lupenoptik auf. Somit wird es möglich, während der Justage des Lesegeräts zum Hologramm vergrößert auf die Hologrammebene zu blicken. Während der Rekonstruktion wird dann die Vergrößerungsoptik wieder herausgeschwenkt.
c) Die Rechenzeit wird verlängert und es werden nicht redundante größere Hologramme geschrieben. Diese Vorgehensweise ist aber mit einem höheren Aufwand verbunden.

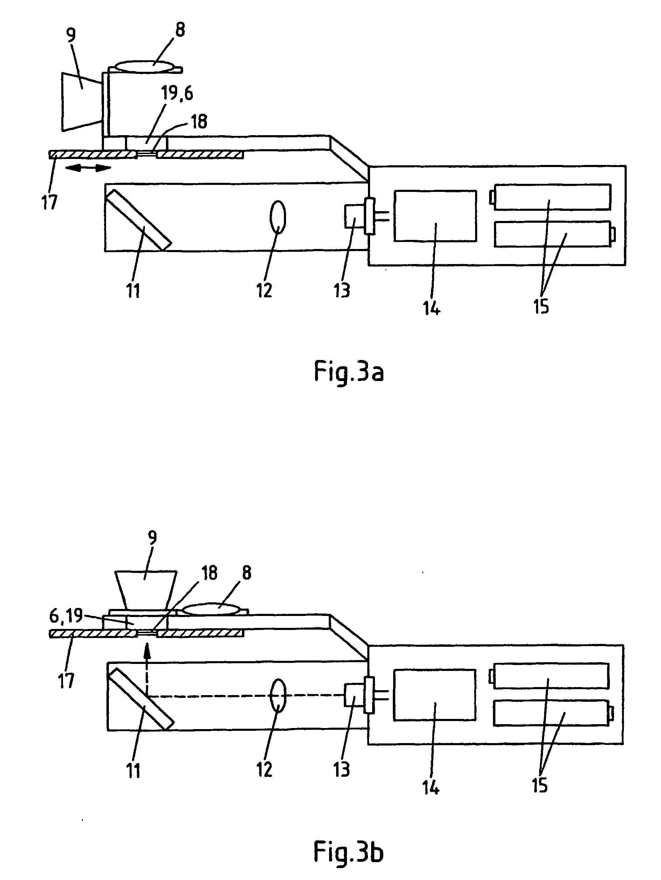

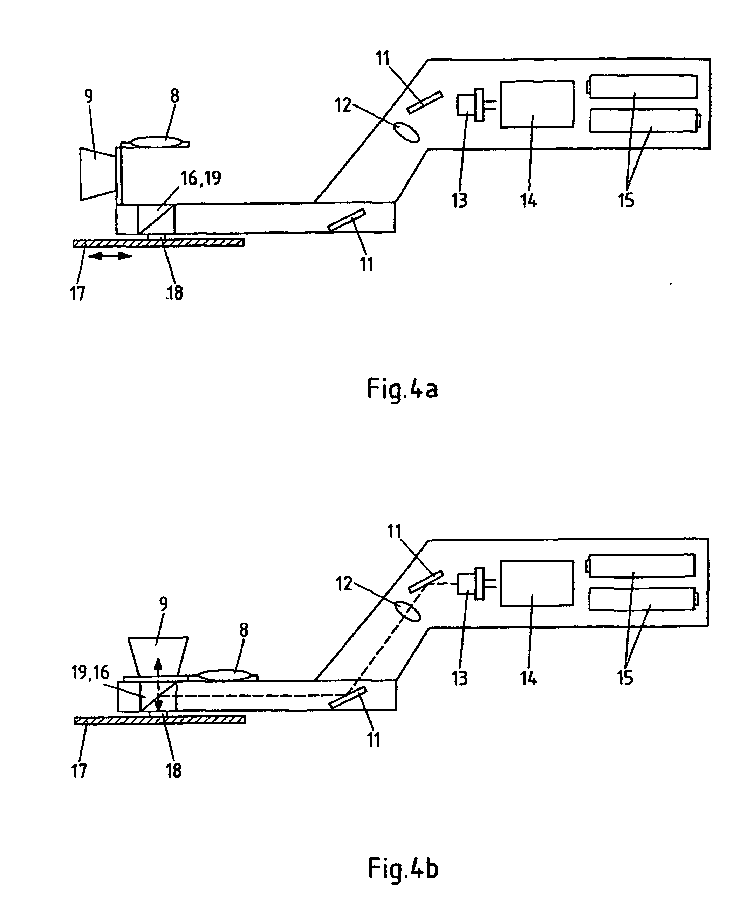

Als weitere Ausführungsbeispiele sind in den Fig. 3a und 3b und in Fig. 4a und b Lesegeräte dargestellt, die sich einer direkten Beleuchtung bedienen.

Dargestellt sind Handlesegeräte, in deren Griff eine Spannungsversorgung 15, ein Laserdiodentreiber 14 und eine Laserdiode 13, die im sichtbaren Wellenlängenbereich abstrahlt, bevorzugt bei 650 nm, da die Dioden aufgrund der in der Unterhaltungsindustrie verwendeten Laserdioden besonders preiswert sind. Darüber hinaus verfügen die Lesegeräte noch über eine Kollimationsoptik 12, mit der es möglich ist den virtuellen Abstand der Lichtquelle 13 zum Speichermedium 18 einzustellen und somit auf die Auflösung der zu betrachtenden Hologramme anzupassen.

Das Lesegerät (Fig. 3a, Justagestellung und Fig. 3b, Auslesestellung) ist zum Auslesen von Transmissionshologrammen geeignet. Hierbei ist es notwendig, den kollimierten Strahl durch das Hologramm auf das Auge zurichten. Hierfür ist Umlenkspiegel 11 vorgesehen. Die Karte 17 kann mit einer Hand an die transparente Anlagefläche 6 gehalten werden, um das Hologramm betrachten zu können. Dabei füllt die Anlagefläche die Austrittsöffnung 19 aus.

Zur Justage des Speichermediums 18 bzw. des Hologramms verfügen die Lesegeräte optional über ein Okular bzw. eine Lupenoptik 8, mit der es möglich ist, die Anlagefläche 6 der Hologramme vergrößert zu betrachten und damit mit Hilfe eines geeigneten Fadenkreuzes die Hologramme auszurichten (Fig. 3a).

Zur Rekonstruktion wird dann die Justageoptik weggeklappt und durch einen Tubus 9 mit einem ergonomischen Gummiflansch ersetzt, durch den man ohne seitliches Streulicht die Rekonstruktion des Hologramms betrachten kann. In bevorzugter Weise ist eine geeignete Fixierungsmöglichkeit für die Hologrammträger am Lesegerät vorgesehen. Diese sind in den Zeichnungen nicht dargestellt, da sie von Anwendung zu Anwendung sehr variabel ausfallen können (einfach Klammern, Magnete, Führungsschienen, etc.).

Das Lesegerät gemäß den Figuren 4a und 4b ist zum Auslesen von Reflexionshologrammen geeignet. Der Strahlengang ist leicht abgeknickt, damit man das Lesegerät auch greifen kann, wenn man Hologramme auslesen will, die auf großen nicht flexiblen Flächen aufgebracht sind. Zur Beleuchtung des Hologramms und gleichzeitigen Betrachtung des Hologramms ist zusätzlich ein Strahlteilerwürfel 16 vorgesehen, der die Austrittsöffnung 19 ausfüllt.

Für die Beschreibung der Justage und Fixierung des Hologramms wird auf die oben dargelegte Beschreibung zu den Fig. 3a und 3b verwiesen.

Weitere mögliche Varianten, die nicht in den Figuren dargestellt sind, sind folgende:

Bei einem weiteren bevorzugten Lesegerät wird das Hologramm weder direkt beleuchtet noch gleichzeitig der Strahl frei durch den Raum gestrahlt. Das Lesegerät ist in einen (Kassen-) Tisch eingearbeitet. Der Laserstrahl wird dann durch einen seitlich abgeschirmten Hohlraum geleitet und direkt oder indirekt betrachtet.

In diesem Zusammenhang wird erwähnt, dass auch Leuchtdioden (LED) als Lichtquelle verwendet werden können, wenn die LED weit genug weg ist und hell genug strahlt. Dann läßt sich auch mit einer LED ein erfindungsgemäßes Einfachlesegerät realisieren.

Wie oben erwähnt kann es sinnvoll sein, die Lichtquelle zu vergrößern. Dieses ist bei direkter Beleuchtung einfach durch die Kollimatorstellung zu realisieren. Bei indirekter Beleuchtung könnte es jedoch auch sinnvoll sein eine zusätzliche Optik in den Strahlengang einzubringen. Diese Optik ist vor oder hinter dem Hologramm zu positionieren und erzeugt ein vergrößertes Bild der Lichtquelle auf der Netzhaut. Dies ist mittels Lupen oder Fernglasoptik zu erreichen.

In die Justierhilfe für die Ausrichtung der Hologramme kann auch eine zusätzliche Beleuchtung eingebracht werden, um das Hologramm besser sichtbar zu machen.

## Patentansprüche

1. Vorrichtung zum Auslesen eines in einem Speichermedium (18) eingeschriebenen Hologramms,
- mit einer Strahlungsquelle (1) zum Erzeugen eines Lesestrahls (2) aus elektromagnetischer Strahlung,
- mit einer Anlagefläche (6;7;16) zum Anlegen des Speichermediums (18) in einer vorgegebenen Ebene und
- mit einer Austrittsöffnung (19) für ein Aufnehmen des vom Hologramm erzeugten Bildes,
**dadurch gekennzeichnet,**
- **dass** im optischen Weg zwischen dem Speichermedium (18) und der Austrittsöffnung (19) keine Abbildungsoptik zum Abbilden des zu erzeugenden Hologramms vorgesehen ist und
- **dass** ein Abstandhalter (5,9) vorgesehen ist, der zwischen der Anlagefläche (6;7;16) und dem Auge eines Betrachters des Hologramms angeordnet ist.

2. Vorrichtung zum Auslesen eines in einem Speichermedium (18) eingeschriebenen Hologramms,
- mit einer Strahlungsquelle (1) zum Erzeugen eines Lesestrahls (2) aus elektromagnetischer Strahlung,
- mit einer Anlagefläche (6;7;16) zum Anlegen des Speichermediums (18) in einer vorgegebenen Ebene und
- mit einer Austrittsöffnung (19) für ein Aufnehmen des vom Hologramm erzeugten Bildes,
**dadurch gekennzeichnet,**
- **dass** eine einschwenkbare Lupenoptik vorgesehen ist,
- wobei in einer ausgeschwenkten Position der Lupenoptik im optischen Weg zwischen dem Speichermedium (18) und der Austrittsöffnung (19) keine Abbildungsoptik zum Abbilden des zu erzeugenden Hologramms vorgesehen ist,
- wobei in einer eingeschwenkten Position der Lupenoptik eine Linse der Lupenoptik als Justierhilfe zum Positionieren des Speichermediums vorgesehen ist und
- **dass** ein Abstandhalter (5,9) vorgesehen ist, der zwischen der Anlagefläche (6;7;16) und dem Auge eines Betrachters des Hologramms angeordnet ist.

3. Vorrichtung nach Anspruch 1 oder 2,
**dadurch gekennzeichnet,**
**dass** der Abstandhalter (5,9) ein Tubus ist.

4. Vorrichtung nach einem der Ansprüche 1 bis 3,
**dadurch gekennzeichnet,**
**dass** Mittel zum Lenken des Lesestrahls auf eine zum Speichermedium (18) beabstandete Oberfläche vorgesehen sind.

5. Vorrichtung nach einem der Ansprüche 1 bis 4,
**dadurch gekennzeichnet,**
**dass** Mittel zum Einkoppeln (7) des von der beabstandeten Oberfläche reflektierten Lesestrahls vorgesehen sind.

6. Vorrichtung nach einem der Ansprüche 1 bis 3,
**dadurch gekennzeichnet,**
**dass** Mittel (11,12;16) zum direkten Beleuchten des Speichermediums (18) vorgesehen sind.

7. vorrichtung nach einem der Ansprüche 1 bis 6,
**dadurch gekennzeichnet,**
**dass** das im Speichermedium (18) eingeschriebene Hologramm in Transmission oder in Reflexion lesbar ist.

## Claims

1. Device for reading out a hologram recorded in a recording medium (18),
- with a radiation source (1) to generate a reading beam (2) of electromagnetic radiation,
- with a mounting surface (6;7;16) on which to lay the recording medium (18) in a specified plane and
- with an outlet (19) to pick up the image generated by the hologram,
**characterised in that**
- there is no projection lens provided in the optical path between the recording medium (18) and the outlet (19), to produce an image of the hologram to be generated and
- that a spacer (5, 9) is provided which is disposed between the mounting surface (6;7;16) and the eye of an observer of the hologram.

2. Device for reading out a hologram written into a recording medium (18),
- with a radiation source (1) to generate a reading beam (2) of electromagnetic radiation,
- with a mounting surface (6;7;16) on which to lay the recording medium
- (18) in a specified plane and
- with an outlet (19) to pick up the image generated by the hologram,
**characterised in that**
- a retractable magnifying lens system is provided, whereby in an extended position of the magnifying lens system there is no projection lens provided in the optical path between the recording medium (18) and the outlet (19), to produce an image of the hologram to be generated and
- whereby in a retracted position of the magnifying lens system, one lens of the magnifying lens system is provided as an aid to adjustment of the recording medium and
- that a spacer (5, 9) is provided which is disposed between the mounting surface (6;7;16) and the eye of an observer of the hologram.

3. Device according to claim 1 or 2,
**characterised in that**
the spacer (5, 9) is a tube.

4. Device according to one of claims 1 to 3,
**characterised in that**
means are provided to steer the reading beam onto a surface which is distanced from the recording medium (18).

5. Device according to one of claims 1 to 4,
**characterised in that**
means for collimation of the reading beam reflected from the distanced surface are provided.

6. Device according to one of claims 1 to 3,
**characterised in that**
means (11,12;16) of direct illumination of the recording medium (18) are provided.

7. Device according to one of claims 1 to 6,
**characterised in that**
the hologram recorded in the recording medium (18) can be read in transmission or reflection.

## Revendications

1. Dispositif de lecture d'un hologramme écrit dans un support d'enregistrement (18), comprenant
- une source de rayonnement (1) pour générer un faisceau de lecture (2) d'un rayonnement électromagnétique,
- une surface de pose (6 ; 7 ; 16) pour poser le support d'enregistrement (18) dans un plan prédéterminé, et
- une ouverture de sortie (19) pour une exposition de l'image générée par l'hologramme,
**caractérisé en ce que**
- dans le trajet optique entre le support d'enregistrement (18) et l'ouverture de sortie (19) aucune optique de reproduction n'est prévue pour reproduire l'hologramme à générer,
- un écarteur (5, 9) disposé entre la surface de pose (6 ; 7 ; 16) et l'oeil d'un observateur de l'hologramme est prévu.

2. Dispositif de lecture d'un hologramme écrit dans un support d'enregistrement (18), comprenant
- une source de rayonnement (1) pour générer un faisceau de lecture (2) d'un rayonnement électromagnétique,
- une surface de pose (6 ; 7 ; 16) pour poser le support d'enregistrement (18) dans un plan prédéterminé, et
- une ouverture de sortie (19) pour un enregistrement de l'image générée par l'hologramme,
**caractérisé en ce**
- **qu'**une optique à loupe pivotante est prévue,
- aucune optique de reproduction pour reproduire l'hologramme à générer n'étant prévue dans le trajet optique entre le support d'enregistrement (18) et l'ouverture de sortie (19) dans une position pivotée vers l'extérieur de l'optique à loupe,
- une lentille de l'optique à loupe étant prévue comme aide d'ajustage pour positionner le support d'enregistrement dans une position pivotée vers l'intérieur de l'optique à loupe, et
- en ce qu'un écarteur (5, 9) disposé entre la surface de pose (6 ; 7 ; 16) et l'oeil d'un observateur de l'hologramme est prévu.

3. Dispositif selon la revendication 1 ou 2,
**caractérisé en ce que** l'écarteur (5, 6) est un tube.

4. Dispositif selon l'une quelconque des revendications 1 à 3,
**caractérisé en ce que** des moyens sont prévus pour diriger le faisceau de lecture sur une surface éloignée du support d'enregistrement (18).

5. Dispositif selon l'une quelconque des revendications 1 à 4,
**caractérisé en ce que** des moyens sont prévus pour l'injection (7) du faisceau de lecture réfléchi par la surface éloignée.

6. Dispositif selon l'une quelconque des revendications 1 à 3,
**caractérisé en ce que** des moyens (11, 12 ; 16) sont prévus pour éclairer directement le support d'enregistrement (18).

7. Dispositif selon l'une quelconque des revendications 1 à 6,
**caractérisé en ce que** l'hologramme écrit dans le support d'enregistrement (18) est lisible par transmission ou par réflexion.
